# FASCICULE DE BREVET EUROPEEN

(11) **EP 2 342 025 B1**
(45) Date de publication et mention de la délivrance du brevet: **09.09.2015**
(21) Numéro de dépôt: 09756006.4
(22) Date de dépôt: 12.10.2009
(51) Int. Cl.: C10G 1/04, B09C 1/00, B01D 15/00

(54) **PROCEDE ET INSTALLATION POUR L'EXTRACTION D'HYDROCARBURES PRESENTS DANS DES MATIERES MINERALES SOLIDES GRANULAIRES OU FRAGMENTEES.**
VERFAHREN UND VORRICHTUNG ZUR EXTRAKTION VON KOHLENWASSERSTOFF AUS GRANULÖSEN ODER FRAGMENTIERTEN FESTEN MINERALIEN
METHOD AND EQUIPMENT FOR EXTRACTING HYDROCARBON FROM GRANULAR OR FRAGMENTED SOLID MINERAL MATERIALS

(30) Priorité: 22.10.2008 FR 0805847
(43) Date de publication de la demande: 13.07.2011
(73) Titulaire: Osead S.A., 1470 Grand Duche de Luxembourg (LU)
(72) Inventeur: FOURT, Jean-François, F-75017 Paris (FR); MICHEL, Dominique, F-75008 Paris (FR); DENIVELLE, Charles, F-13320 Bouc Bel Air (FR)
(74) Mandataire: Mazabraud, Xavier
(86) Numéro de dépôt international: PCT/FR2009/051935
(87) Numéro de publication internationale: WO 2010/046578

(56) Documents cités:
- EP-A- 0 860 491
- WO-A-94/21392
- DE-A1- 19 707 251
- US-A- 5 514 218
- US-A- 5 911 541

## Description

La présente invention a pour objet un procédé et une installation pour l'extraction d'hydrocarbures présents dans des matières minérales solides granulaires fragmentées.

Elle s'applique plus particulièrement, mais non exclusivement, à la production d'hydrocarbures à partir de gisements comportant un mélange de minéraux tels que par exemple du sable et d'hydrocarbure tels que, par exemple, du bitume. Néanmoins, l'invention ne se limite pas à ce type d'application. Elle peut aussi bien s'appliquer à la dépollution de sols, voire même de liquides souillés par des hydrocarbures.

D'une manière générale, on sait qu'il a déjà été proposé notamment par le brevet européen EP 0 860 491 issu du brevet allemand brevet DE19707251, un procédé pour la purification de sols ou d'autres substances solides granulées telles que le sable, le gravier ou similaire qui sont contaminées par des hydrocarbures. Ce procédé consiste à réaliser un mélange du sol ou de la substance solide avec un agent sorbant puis à effectuer une séparation du mélange en une phase contenant principalement l'agent sorbant chargé des matières polluantes et une phase contenant le sol ou la substance solide purifiée. On effectue ensuite la purification de l'agent sorbant par élimination des hydrocarbures dont il est chargé. L'agent sorbant se présente sous la forme de grains ou de flocons dont la grosseur est réglée par déchiquetage mécanique. Conformément à ce procédé, préalablement à l'étape de séparation du mélange, on ajoute à ce dernier un liquide, habituellement de l'eau, la séparation s'effectuant alors par flottaison. La purification est ensuite réalisée dans une presse ou une centrifugeuse à deux étages.

Le brevet US 5 514 218 décrit aussi un procédé de purification de sols contaminés.

Par le brevet FR 2 905 702 on a également proposé un procédé d'extraction d'huiles minérales contenues dans les sables ou les schistes bitumineux utilisant un principe similaire à celui précédemment évoqué selon lequel le mélange de matière minérale chargée et de matière sorbante est introduit dans une cuve de séparation primaire par décantation contenant de l'eau. A l'intérieur de cette cuve, le mélange est agité au début du cycle de décantation.

Ce processus permet en principe d'obtenir un équilibre tri phasique entre une phase solide constituée de sable localisé au fond de la cuve de décantation, une phase liquide se rapportant à de l'eau non polluée au-dessus du sable, et, à la surface de l'eau, une phase constituée de matériaux flottants consistant en la matière sorbante chargée d'huiles.

En fait, l'inconvénient majeur des procédés précédemment évoqués consiste en ce qu'ils ne permettent pas d'effectuer un traitement "en continu" des matières chargées, et ce, en raison du fait qu'il fait intervenir une phase de décantation impliquant une période de temps relativement importante au cours de laquelle le mélange eau/minéraux chargés/matière sorbante ne doit pas être agité pour obtenir la séparation des phases. Le traitement effectué est donc discontinu. Dans le cas où l'on effectue une agitation du mélange préalablement à la phase de décantation, ce temps nécessaire à la décantation est considérablement allongé.

Par ailleurs, un autre inconvénient important des solutions précédemment décrites réside dans le fait que le processus de décantation utilisé ne permet pas l'extraction totale des particules minérales. En effet, certaines particules, et plus particulièrement des particules fines, ont tendance à venir adhérer à la couche d'hydrocarbure qui recouvre les grains ou les flocons d'agents sorbants. Or, la présence de ces particules sur la matière sorbante chargée est particulièrement désavantageuse :
- Elle exclut l'usage d'un dispositif d'extraction par centrifugation de l'hydrocarbure adhérant aux particules de matière sorbante tels que, par exemple, des dispositifs de centrifugation, notamment en raison des propriétés abrasives des particules qui induiraient la détérioration rapide par abrasion des dispositifs de centrifugation utilisés.
- Elle ne permet pas l'obtention d'un hydrocarbure exempt de particules. Les solutions proposées dans les documents précédemment cités ne permettent pas d'éliminer les particules fines, lesquelles demeurent donc dans l'hydrocarbure extrait en le rendant impropre pour certaines utilisations.

L'invention a donc plus particulièrement pour but de supprimer ces inconvénients.

A cet effet, elle propose un procédé d'extraction ou de production d'hydrocarbures à partir de matières minérales solides granulaires ou fragmentaires, ce procédé comportant une étape de mélange de la matière minérale avec une matière sorbante se présentant sous la forme de grains ou de flocons éventuellement déchiquetés, de manière à ce que la matière sorbante se charge d'hydrocarbure au détriment de la matière minérale et une étape de séparation de la matière minérale et de la matière sorbante chargée d'hydrocarbure et une étape d'extraction de l'hydrocarbure présent sur la matière sorbante ou même de transformation de la matière sorbante chargée en vue d'une utilisation spécifique. Selon l'invention, ce procédé est caractérisé en ce que la susdite étape de séparation comprend le transfert sur une surface de criblage d'un crible et le lavage par un liquide de lavage, de préférence par de l'eau, du mélange obtenu à l'issue de l'étape de mélange, de sorte qu'une première fraction issue dudit crible comprend essentiellement de la matière sorbante chargées d'hydrocarbure, et, une deuxième fraction issue dudit crible est essentiellement constituée d'une matière minérale épuisée, et, en ce que la susdite étape d'extraction comprend une centrifugation de ladite matière sorbante chargée.

Le transfert du mélange passant à travers la surface de lavage et de criblage, contenant les matières minérales, du liquide de lavage ainsi que de faibles quantités de matière sorbante, à un circuit de traitement permet de récupérer :
- la matière minérale libérée de la plus grande part des hydrocarbures qu'elle contenait initialement,
- le liquide de lavage en vue d'un recyclage éventuel,
- les fragments de matière sorbante de petite taille qui n'ont pas été retenus lors de l'étape de lavage/criblage.
Avantageusement :
- le procédé comprend une étape préalable pour la préparation de la matière minérale en la mélangeant avec un solvant et/ou un diluant,
- après l'étape de criblage, et avant l'étape d'extraction, le procédé comprend au moins une autre étape d'abord de mélange avec un diluant et un solvant, ledit mélange étant suivi d'un criblage pour séparer la matière sorbante chargée d'hydrocarbure d'avec de la matière minérale adhérant audit hydrocarbure,
- le liquide de lavage récupéré dans le circuit de traitement pourra être transmis à un circuit de recyclage en vue d'être réinjecté sur la surface de lavage et de criblage,
- la matière sorbante qui n'a pas été retenue lors de l'étape de lavage/criblage pourra être soit transférée dans le poste où s'effectue la séparation complémentaire des hydrocarbures d'avec la matière sorbante, soit envoyée à un poste de transformation en vue d'une utilisation spécifique, par exemple comme charge thermique,
- la matière sorbante pourra être réversible ou irréversible. Dans le cas où elle est réversible, après extraction de l'hydrocarbure, la matière sorbante pourra être réutilisée dans le mélange prévu lors de l'étape de mélange,
- l'étape d'extraction comprend en outre une abrasion de la matière sorbante chargée,
- la matière sorbante est une matière essentiellement adsorbante.
Selon un autre objectif de l'invention, une installation pour la mise en oeuvre d'un procédé d'extraction ou de production d'hydrocarbure à partir d'une matière minérale solide granulaire ou fragmentaire selon l'invention, est caractérisée en ce qu'elle comprend, disposés successivement en série :
- un mélangeur prévu pour mélanger ladite matière minérale avec une matière sorbante, de manière à ce que la matière sorbante se charge d'hydrocarbure au détriment de la matière minérale ;
- une surface de criblage prévu pour la séparation d'au moins une partie essentielle de la matière sorbante chargée d'hydrocarbure, d'avec un reste du mélange sortant du mélangeur ; et,
un dispositif de centrifugation prévue pour extraire l'essentiel de l'hydrocarbure présent sur la partie de matière sorbante séparée.
Un mode d'exécution d'une installation selon l'invention sera décrit ci-après, à titre d'exemple non limitatif, avec référence aux dessins annexés dans desquels :
- Les figures 1 et 2 raccordées l'une à l'autre par superposition des axes XX' et YY' montrent un schéma synoptique d'une installation d'extraction ou de production en continu d'hydrocarbures à partir de sables bitumineux, sans modification de ces hydrocarbures.
- La figure 3 est une vue en coupe schématique d'un grain de matière sorbante chargée d'hydrocarbure.

Pour permettre une description plus fluide, le terme sorbant sera utilisé au lieu de matière sorbante. On notera néanmoins que le sorbant ainsi nommé peut prendre diverses configurations et notamment désigner, soit un produit entièrement fait, dans sa masse, de matériau sorbant, soit un produit comprenant à sa surface un matériau sorbant.

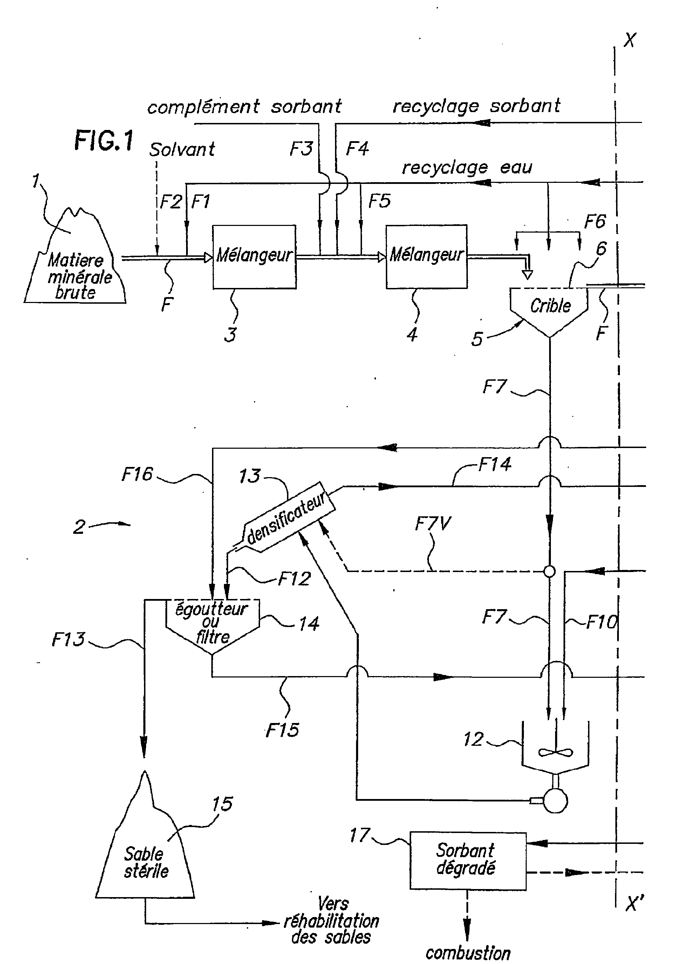

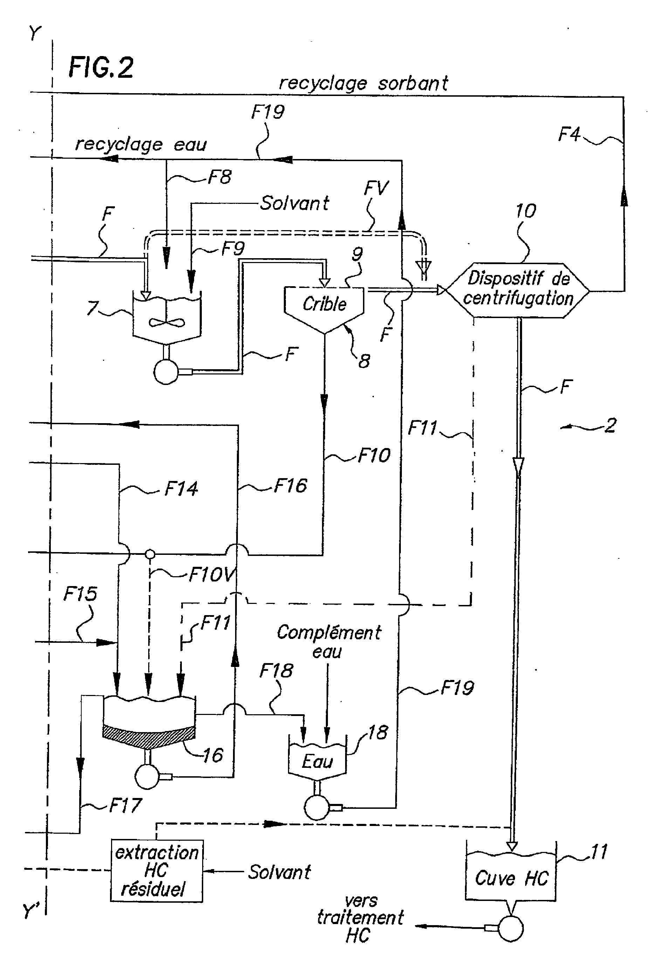

Les figures 1 et 2 illustrent schématiquement une installation 2 pour l'extraction d'hydrocarbure HC à partir d'une matière minérale brute 1. Aux figures 1 et 2, le flux principal F, c'est-à-dire le flux menant directement de la matière minérale brute jusqu'à l'hydrocarbure extrait de cette matière brute, est illustré en traits doubles. D'autres flux F1, F2, F3 ..., secondaires, y sont illustrés en traits simples.

On va d'abord plus particulièrement décrire le flux principal F, tel qu'illustré aux figures 1 et 2.

Selon l'invention, une matière minérale brute 1 est prévue pour être traitée dans l'installation 2 en vue d'en extraire des hydrocarbures HC qu'elle contient. L'installation 2 est prévue pour fonctionner en flux continu.

Dans l'exemple illustré, la matière minérale brute est un sable bitumineux. En outre, la sorption est prévue réversible, c'est-à-dire qu'après sorption de l'hydrocarbure par le sorbant, l'hydrocarbure et le sorbant peuvent être séparés l'un de l'autre.

L'installation 2 comprend d'abord deux mélangeurs 3,4 disposés en ligne. Le premier mélangeur 3 reçoit le sable bitumineux 1, de l'eau selon un flux F1 et éventuellement un solvant selon un flux F2. Le premier mélangeur mélange le sable bitumineux, l'eau et le solvant éventuel. Le mélange issu du premier mélangeur 3 est additionné de sorbant F3, F4 et d'eau F5, le tout étant introduit dans le deuxième mélangeur 4, qui en effectue le mélange. Au cours de ce deuxième mélange, l'essentiel de l'hydrocarbure contenu dans le sable bitumineux 1 vient se fixer au sorbant par sorption.

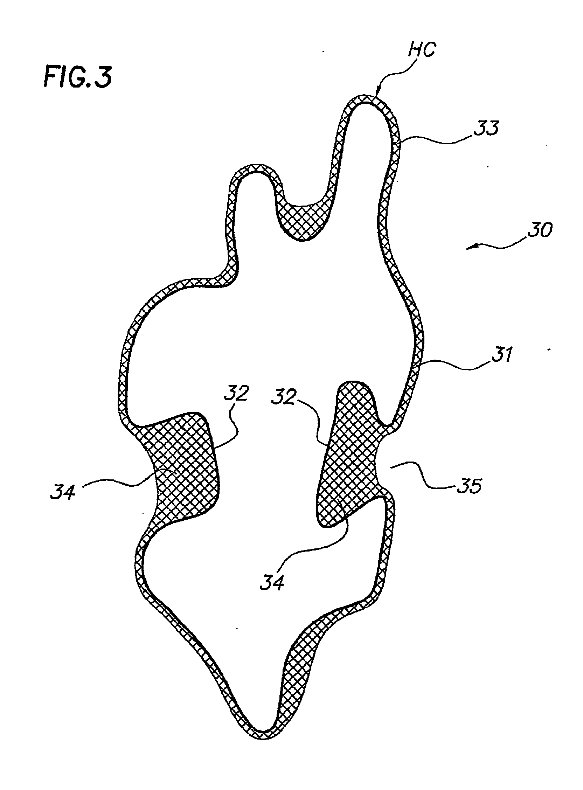

Dans l'exemple illustré, le sorbant utilisé est constitué de grains ayant des dimensions telles qu'elles peuvent être retenues par un crible 3mm et d'une densité voisine de 0,05. Ces grains seront décrits par la suite, en référence à la figure 3.

La sorption étant réversible, on note qu'à cette étape on utilise du sorbant recyclé F4. Un complément de sorbant F3 est ajouté, notamment pour compenser la perte correspondant à du sorbant dégradé au cours de cycles précédents.

Le deuxième mélange, issu du deuxième mélangeur 4, est ensuite soumis à un crible 5 et à un lavage par de l'eau F6. La surface de criblage 6 du crible 5 est prévue pour laisser passer des particules de dimensions inférieures à par exemple 1 ou 2mm, de sorte qu'une première fraction du deuxième mélange est retenue par le crible 5 et séparée d'une deuxième fraction qui traverse la surface de criblage 6. Le lavage permet de libérer une partie au moins des particules minérales entraînées mécaniquement avec le sorbant voire même adhérant à l'hydrocarbure retenu par le sorbant.

La deuxième fraction est essentiellement constituée d'un sable épuisé, c'est-à-dire d'un sable débarrassé de façon sensiblement totale de l'hydrocarbure contenu initialement dans la matière brute 1. Cette seconde fraction est évacuée avec l'eau de lavage selon un flux F7.

La première fraction issue du crible 5 comprend essentiellement des particules de sorbant chargées d'hydrocarbure. Elle comprend généralement aussi des particules minérales fines, désignées par le terme « fines », qui adhèrent à l'hydrocarbure. Cette première fraction est donc avantageusement conduite selon F vers une nouvelle étape de lavage, constituée, dans l'exemple illustré, d'un troisième mélangeur 7, puis d'un deuxième crible 8. Le troisième mélangeur 7 et le deuxième crible 8 sont destinés à séparer les fines d'avec les grains de sorbant chargé. Pour ce faire, la première fraction issue du premier crible 5 est additionnée d'eau F8 et d'un solvant F9 et introduite dans le troisième mélangeur 7, qui les mélange, de sorte que, par son action, le solvant désolidarise les fines d'avec les grains de sorbant chargé. Ce mélange est ensuite soumis au crible 8. Le crible 8 a une surface de criblage 9 prévue pour laisser passer les fines tout en retenant les grains de sorbant chargé. Les grains de sorbant, ainsi débarrassés de la quasi-totalité des fines, sont ensuite dirigés vers un dispositif de centrifugation 10. Les fines et la liquide de lavage F8 sont évacués séparément du deuxième crible 8 selon un flux F10.

Si la première fraction issue du premier crible 5 contient une quantité de fines négligeable, ou acceptable compte tenu de la qualité d'hydrocarbure souhaitée, cette première fraction peut être conduite directement du premier crible 5 vers le dispositif de centrifugation 10, selon une variante FV du flux principal.

Le dispositif de centrifugation 10 est prévu pour séparer le sorbant d'avec l'hydrocarbure HC. Ce dernier est ensuite dirigé selon F vers une cuve de stockage 11. L'hydrocarbure peut alors être traité en vue d'une utilisation finale.

En sortie du dispositif de centrifugation 10, on récupère une partie principale de sorbant, recyclée selon F4 pour être réinjectée en amont du deuxième mélangeur 4. Selon le type de dispositif de centrifugation utilisé dans le procédé, de l'eau potentiellement chargée peut être évacuée du dispositif de centrifugation 10 selon un flux F11. Cette eau chargée peut en outre comprendre des fines résiduelles.

On va maintenant décrire les flux secondaires, toujours en référence aux figures 1 et 2.

Les flux F7 et F10, issus respectivement des cribles 5 et 8, sont dirigés vers une cuve d'agitation 12 pour y être homogénéisés, puis, au-delà de la cuve 12 vers un densificateur 13.

Une première fraction, principalement constituée de sable, de quelques fines et d'eau résiduelle, est issue du densificateur selon un flux F12 vers un égoutteur ou filtre 14. Les matières égouttées sont évacuées de l'égoutteur/filtre 14, selon un flux F13, vers un stockage. Les matières égouttées y forment un sable stérile 15.

Une deuxième fraction, formée d'eau potentiellement chargée, est issue du densificateur 13 selon un flux F14. Cette eau chargée comprend généralement du sorbant dégradé, de faibles dimensions, ayant franchi la ou les grille(s) de criblage 6, 9. Cette eau potentiellement chargée peut en outre comprendre des fines résiduelles.

Le flux F14 aboutit à un épaississeur 16. Le flux F11 d'eau potentiellement chargée issu du dispositif de centrifugation 10 aboutit aussi à l'épaississeur 16. Un flux F15 d'eau issue de l'égoutteur/filtre 14 abouti lui aussi à l'épaississeur 16.

Dans l'épaississeur 16, les différentes parties d'eau chargée sont séparées par décantation, éventuellement après ajout d'un floculant. Les éventuelles fines résiduelles se déposent au fond de l'épaississeur d'où elles sont extraites selon un flux 16 et transportées jusqu'à l'égoutteur/filtre 14, en vue de leur stockage 15. L'éventuel sorbant dégradé surnage à la surface d'une eau épurée. Le sorbant dégradé peut alors être récupéré en surface selon un flux F17, par exemple pour être stocké dans une zone de stockage 17 en vue de son traitement ultérieur. L'eau épurée est avantageusement puisée, sous la surface, pour être amenée selon un flux F18 dans une cuve tampon 18 alimentant un flux F19 de recyclage de l'eau. Le flux F19 se divise en les flux F1, F5, F6 et F8 précédemment décrits.

De l'hydrocarbure HC résiduel adhère généralement au sorbant dégradé stocké 17. Optionnellement, deux traitements peuvent être appliqués au sorbant dégradé. Il peut par exemple être brûlé, par exemple pour produire de l'électricité. Il peut aussi être traité, par exemple à l'aide d'un solvant pour en extraire une partie de l'hydrocarbure HC résiduel. Le mélange d'hydrocarbure et de solvant peut alors être ajouté à celui stocké dans la cuve 11, ou, utilisé comme solvant selon le flux F9.

De nombreuses variantes peuvent être prévues pour l'installation et le procédé décrits ci-dessus.

Une variante F7V du flux F7 consiste à mener tout ou partie du flux F7 issus du premier crible 5 directement au densificateur 13, sans passer par la cuve d'agitation 12. Cette variante est représentée à la figure 1 en trait interrompu.

Une variante F10V du flux F10 consiste à mener tout ou partie du flux F10 issus du deuxième crible 8 directement à l'épaississeur 16, au lieu de la cuve d'agitation 12. Cette variante est représentée à la figure 2 en trait interrompu.

Les variantes FV, F7V et F10V peuvent être réalisées chacune selon deux modes.

Selon un premier mode de réalisation, chaque variante indépendamment d'une autre peut être mise en oeuvre sous la forme d'un by-pass, ledit by-pass pouvant être commandé et utilisé selon le besoin. Par exemple, l'installation 2 peut prévoir les flux FV et F ; ainsi, si la matière brute 1 contient une quantité négligeable de fines, on peut choisir de n'utiliser ni le troisième mélangeur 7, ni le deuxième crible 8 mais d'utiliser le flux FV ; au contraire, on peut choisir d'utiliser le flux F, dès lors que la matière brute 1 comprend trop de fines.

Selon un deuxième mode de réalisation, chaque variante indépendamment d'une autre peut être mise en oeuvre comme étant le seul flux prévu. Ainsi, si l'installation 2 est prévue pour ne traiter que de la matière brute 1 ne contenant qu'une quantité négligeable de fines, l'installation peut ne pas comprendre de troisième mélangeur 7 ni de deuxième crible 8.

On va maintenant décrire l'action du dispositif de centrifugation 10, notamment en se référant à la figure 3.

L'action centrifuge du dispositif de centrifugation 10 est nettement favorisée par la très grande différence de densité entre l'hydrocarbure HC et celle du sorbant. En effet, dans l'exemple illustré, la densité du sorbant est de l'ordre de vingt fois plus faible que celle de l'hydrocarbure. Cependant, la simple action centrifuge n'est pas nécessairement suffisante pour séparer totalement l'hydrocarbure HC d'avec le sorbant, et elle est avantageusement complétée par une action chimique, comme cela va être expliqué en référence à la figure 3.

La figure 3 représente une coupe schématique d'un grain 30 de sorbant chargé d'hydrocarbure. Le trait plein épais représente le contour de la surface 31 de la particule 30 tel qu'il est sensiblement conservé entre son introduction selon F3 ou F4, dans le flux F, jusqu'à son introduction dans le dispositif de centrifugation 10. La particule 30 a une forme sensiblement floconneuse et sa surface 31 comprend des cavités ouvertes 32.

L'hydrocarbure adhérant au grain 30 est représenté en un double hachurage. Comme illustré à titre d'exemple à la figure 3, l'hydrocarbure HC adhère de deux façons au grain 30. D'une première façon, il adhère par adsorption à la surface 31 du grain 30, en couche mince 33. D'une deuxième façon, il forme des amas 34 qui remplissent les cavités 32.

Lors de l'opération de centrifugation, l'hydrocarbure en couche mince 33 est assez aisément séparé par l'unique action de centrifugation. Cependant, la récupération des hydrocarbures 34 contenus dans certaines cavités 32 peut nécessiter, soit une force centrifuge plus importante, soit la dilution des hydrocarbures par rajout de solvant. L'ajout de solvant permet de réduire la viscosité des hydrocarbures concernés.

A titre optionnel, notamment si l'hydrocarbure est d'un type lourd et visqueux, on peut compléter l'action centrifuge du dispositif de centrifugation 10 par une dilution des hydrocarbures à l'aide d'un solvant approprié. Ce solvant peut être introduit en amont du dispositif de centrifugation 10.

Bien entendu, la présente invention n'est pas limitée à l'exemple décrit. De nombreuses variantes ou compléments peuvent y être apportés, sans sortir du cadre de l'invention.

Ainsi, plutôt que de l'eau, on peut utiliser un autre liquide de lavage pour le mélange traité par le premier crible.

## Revendications

1. Procédé d'extraction ou de production d'hydrocarbure à partir d'une matière minérale (1) solide granulaire ou fragmentaire, ledit procédé comportant :
- une étape de mélange (4) de la matière minérale avec une matière sorbante, de manière à ce que la matière sorbante se charge d'hydrocarbure au détriment de la matière minérale ; puis,
- une étape (5) de séparation d'au moins une partie essentielle de la matière sorbante chargée d'hydrocarbure, d'avec le reste du mélange obtenu à l'étape précédente ; puis,
- une étape d'extraction (10) de l'essentiel de l'hydrocarbure présent sur la partie de matière sorbante séparée,
**caractérisé en ce que** la susdite étape de séparation comprend le transfert, sur une surface de criblage (6) d'un crible (5) et le lavage (F6) par un liquide de lavage, de préférence par de l'eau, du mélange obtenu à l'issue de l'étape de mélange (4), de sorte que :
- une première fraction issue dudit crible (5) comprend essentiellement de la matière sorbante chargée d'hydrocarbure ; et,
- une deuxième fraction issue dudit crible (5) est essentiellement constituée d'une matière minérale épuisée ;
et **en ce que** la susdite étape d'extraction (10) comprend une centrifugation de ladite matière sorbante chargée.

2. Procédé selon la revendication 1,
**Caractérisé en ce que** la matière minérale est un sable bitumineux.

3. Procédé selon l'une des revendications 1 et 2,
**caractérisé en ce qu'**il comprend en outre une étape pour le transfert (F7 ; F7V) la deuxième fraction, constituée d'un mélange contenant :
- des matières minérales ;
- du liquide de lavage ; et,
- de faibles quantités de matière sorbante,
à un circuit de traitement (F12 - F18) qui permet de récupérer, séparément :
- la matière minérale libérée de la plus grande part des hydrocarbures qu'elle contenait initialement,
- le liquide de lavage ; et,
- les fragments de matière sorbante de petite taille qui n'ont pas été retenus lors de l'étape de lavage/criblage.

4. Procédé selon la revendication 3,
**caractérisé en ce que** le liquide de lavage récupéré est recyclé (F19), notamment pour être réutilisé en tant que liquide de lavage.

5. Procédé selon la revendication 3 ou 4,
**caractérisé en ce que** la matière sorbante récupérée qui n'a pas été retenue lors de l'étape de lavage/criblage est transférée dans un poste où s'effectue une séparation complémentaire des hydrocarbures d'avec la matière sorbante et/ou elle est transformée en vue d'une utilisation spécifique.

6. Procédé selon l'une des revendications précédentes,
**caractérisé en ce qu'**il comprend en outre une étape de transformation d'une partie de la matière sorbante chargée en vue d'une utilisation spécifique.

7. Procédé selon l'une des revendications précédentes,
**caractérisé en ce qu'**il comprend une étape, préalable à l'étape de mélange (4) de la matière minérale avec une matière sorbante, pour la préparation de la matière minérale en la mélangeant (3) avec un solvant (F2) et/ou un diluant (F1), ledit diluant étant de préférence de l'eau.

8. Procédé selon l'une des revendications précédentes,
**caractérisé en ce qu'**à l'étape de mélange (4) de la matière minérale avec la matière sorbante, on ajoute un solvant au mélange.

9. Procédé selon l'une des revendications précédentes,
**caractérisé en ce que** l'on utilise une matière sorbante choisie de sorte que la sorption est réversible, et **en ce qu'**après extraction de l'hydrocarbure, on réutilise la matière sorbante dans le mélange prévu lors de l'étape de mélange.

10. Procédé selon l'une des revendications précédentes,
**caractérisé en ce qu'**après l'étape de criblage, et avant l'étape d'extraction, il comprend au moins une autre étape d'abord de mélange avec un diluant et un solvant, ledit mélange étant suivi d'un criblage pour séparer la matière sorbante chargée d'hydrocarbure d'avec de la matière minérale adhérant audit hydrocarbure.

11. Procédé selon l'une des revendications précédentes,
**caractérisé en ce que** l'étape d'extraction comprend en outre une abrasion de la matière sorbante chargée.

12. Procédé selon l'une des revendications 2 à 5,
**caractérisé en ce que** le liquide de lavage est de l'eau.

13. Procédé selon l'une des revendications 7 et 10,
**caractérisé en ce que** le diluant est de l'eau.

14. Procédé selon l'une des revendications précédentes,
**caractérisé en ce que** la matière sorbante se présente sous la forme de grains ou de flocons, notamment obtenus par déchiquetage.

15. Procédé selon l'une des revendications précédentes,
**caractérisé en ce que** la matière sorbante est une matière essentiellement adsorbante.

16. Installation pour la mise en oeuvre d'un procédé d'extraction ou de production d'hydrocarbure à partir d'une matière minérale (1) solide granulaire ou fragmentaire selon l'une des revendications précédentes, **caractérisée en ce qu'**elle comprend, disposés successivement en série :
- un mélangeur (4) prévu pour mélanger ladite matière minérale avec une matière sorbante et avec un diluant, de préférence de l'eau, de manière à ce que la matière sorbante se charge d'hydrocarbure au détriment de la matière minérale ;
- une surface de criblage (6) prévue pour la séparation d'une première fraction comprenant une partie essentielle de la matière sorbante chargée d'hydrocarbure, d'avec une deuxième fraction essentiellement constituée d'une matière minérale épuisée ;
- des moyens de lavage, de préférence à l'eau, sur ladite surface de criblage ;
- des moyens (7, 8, 9, 10) pour traiter la première fraction séparément de ladite deuxième fraction ;
lesdits moyens de traitement de la première fraction comprenant un dispositif de centrifugation (10) prévu pour extraire l'essentiel de l'hydrocarbure présent sur la partie de matière sorbante séparée.

## Patentansprüche

1. Verfahren zur Extraktion oder Herstellung von Kohlenwasserstoff aus einem granulösen oder fragmentierten festen Mineral (1), wobei das Verfahren folgendes umfasst:
- einen Schritt des Mischens (4) des Minerals mit einem Sorbens, derart, dass sich das Sorbens auf Kosten des Minerals mit Kohlenwasserwasserstoff belädt; anschließend
- einen Schritt des Abtrennens (5) von mindestens einem wesentlichen Teil des mit Kohlenwasserstoff beladenen Sorbens von dem Rest des im vorhergehenden Schritt erhaltenen Gemisches; anschließend
- eine Schritt des Extrahierens (10) von im Wesentlichen des Kohlenwasserstoffs, der auf dem abgetrennten Teil des Sorbens vorhanden ist,
**dadurch gekennzeichnet, dass** der oben genannte Schritt des Abtrennens die Überführung, auf eine Siebfläche (6) eines Siebs (5) und das Waschen (F6) mit einer Waschflüssigkeit, vorzugsweise Wasser, des aus dem Schritt des Mischens (4) erhaltenen Gemisches umfasst, derart, dass:
- eine erste Fraktion aus dem Sieb (5) im Wesentlichen mit Kohlenwasserstoff beladenes Sorbens umfasst ; und
- eine zweite Fraktion aus dem Sieb (5) im Wesentlichen aus einem erschöpften Mineral besteht;
und dadurch, dass der oben genannte Schritt des Extrahierens (10) eine Zentrifugation des beladenen Sorbens umfasst.

2. Verfahren nach Anspruch 1,
**dadurch gekennzeichnet, dass** das Mineral ein Bitumensand ist.

3. Verfahren nach einem der Ansprüche 1 und 2,
**dadurch gekennzeichnet, dass** es weiterhin einen Schritt für die Überführung (F7; F7V) der zweiten Fraktion umfasst, die aus einem Gemisch besteht, das folgendes umfasst:
- Mineralien;
- Waschflüssigkeit; und
- geringe Mengen Sorbens,
in einen Behandlungskreislauf (f12-F18) umfasst, der es ermöglicht, getrennt, folgendes zu gewinnen:
- das Mineral frei vom größten Teil der Kohlenwasserstoffe, welche es ursprünglich enthielt,
- die Wachflüssigkeit; und
- die Fragmente von Sorbens kleiner Größe, die während des Schritts des Waschens/Siebens nicht zurückgehalten wurden.

4. Verfahren nach Anspruch 3,
**dadurch gekennzeichnet, dass** die gewonnene Waschflüssigkeit recycelt wird (F19), insbesondere zur Wiederverwendung als Waschflüssigkeit.

5. Verfahren nach Anspruch 3 oder 4,
**dadurch gekennzeichnet, dass** das gewonnene Sorbens, das nicht während des Schritt des Waschens/Siebens zurückbehalten wurde, in eine Charge übergeführt wird, in der eine zusätzliche Abtrennung der Kohlenwasserstoffe von dem Sorbens erfolgt, und/oder es im Hinblick auf eine besondere Verwendung umgeformt wird.

6. Verfahren nach einem der vorhergehenden Ansprüche,
**dadurch gekennzeichnet, dass** es weiterhin einen Schritt der Umwandlung eines Teils des beladenen Sorbens im Hinblick auf eine bestimmte Verwendung umfasst.

7. Verfahren nach einem der vorhergehenden Ansprüche,
dadurch gelcennzeichnet, dass es einen Schritt vor dem Schritt des Mischens (4) des Minerals mit einem Sorbens, zur Herstellung von Mineral durch sein Mischen (3) mit einem Lösungsmittel (F2) und/oder einem Verdünnungsmittel (F1) umfasst, wobei das Verdünnungsmittel bevorzugt Wasser ist.

8. Verfahren nach einem der vorhergehenden Ansprüche,
**dadurch gekennzeichnet, dass** im Schritt des Mischens (4) des Minerals mit dem Sorbens dem Gemisch ein Lösungsmittel zugesetzt wird.

9. Verfahren nach einem der vorhergehenden Ansprüche,
**dadurch gekennzeichnet, dass** ein Sorbens, das so ausgewählt wird, dass die Sorption reversible ist, verwendet wird und dadurch dass nach der Extraktion des Kohlenwasserstoffs das Sorbens in dem Gemisch wiederverwendet wird, das im dem Schritt des Mischens vorgesehen ist.

10. Verfahren nach einem der vorhergehenden Ansprüche,
**dadurch gekennzeichnet, dass** es nach dem Schritt des Siebens und vor dem Schritt des Extrahierens, mindestens einen anderen Schritt des Mischens zuerst mit einem Verdünnungsmittel und einem Lösungsmittel umfasst, wobei auf das Mischen ein Sieben folgt, um das mit Kohlenwasserstoff beladenen Sorbens von dem am Kohlenwasserstoff anhaftenden Mineral abzutrennen.

11. Verfahren nach einem der vorhergehenden Ansprüche,
**dadurch gekennzeichnet, dass** der Schritt der Extraktion weiterhin eine Abrasion des beladenen Sorbens umfasst.

12. Verfahren nach einem der Ansprüche 2 bis 5,
**dadurch gekennzeichnet, dass** die Waschflüssigkeit Wasser ist.

13. Verfahren nach einem der Ansprüche 7 und 10,
**dadurch gekennzeichnet, dass** das Verdünnungsmittel Wasser ist.

14. Verfahren nach einem der vorhergehenden Ansprüche,
**dadurch gekennzeichnet, dass** das Sorbens in der Form von Körnchen oder Flocken vorliegt, die insbesondere durch Schreddern erhalten werden.

15. Verfahren nach einem der vorhergehenden Ansprüche,
**dadurch gekennzeichnet, dass** das Sorbens im Wesentlichen ein Adsorbens ist.

16. Anlage zur Durchführung eines Verfahrens zur Extraktion oder Herstellung von Kohlenwasserstoff aus einem granulösen oder fiagmentierten festen Mineral (1) nach einem der vorhergehenden Ansprüche, **dadurch gekennzeichnet, dass** sie aufeinanderfolgend angeordnet folgendes umfasst:
- einen Mischer (4), der zum Mischen des Minerals mit einem Sorbens und mit einem Verdünnungsmittel, vorzugsweise Wasser, vorgesehen ist, derart, dass sich das Sorbens auf Kosten des Minerals mit Kohlenwasserwasserstoff belädt;
- eine Siebfläche (6), die zur Abtrennung einer ersten Fraktion, umfassend einen wesentlichen Teil des mit Kohlenwasserstoff beladenen Sorbens, von einer zweiten Fraktion, die im Wesentlichen aus einer erschöpften Mineralfraktion besteht, vorgesehen ist,
- Mittel zum Waschen, vorzugsweise Waser, auf der Siebfläche;
- Mittel (7, 8, 9, 10) zum Behandeln der ersten Fraktion getrennt von der zweiten Friktion;
wobei die Mittel zur Behandlung der ersten Fraktion eine Zentrifugationsvorrichtung (10) umfassen, die zur Extraktion des Wesentlichen des Kohlenwasserstoffs, das auf dem abgetrennten Sorbensteil vorhanden ist, vorgesehen ist.

## Claims

1. Method for extracting or producing hydrocarbon from a granular or fragmentary solid mineral material (1), said method comprising:
- a step for mixing (4) the mineral material with a sorbent material, such that the sorbent material is charged with hydrocarbon to the detriment of the mineral material; followed by,
- a step (5) for separating at least an essential portion of the sorbent material charged with hydrocarbon, from the remainder of the mixture obtained in the preceding step; followed by,
- a step for extracting (10) most of the hydrocarbon present on the separated sorbent material portion,
**characterised in that** said separation step comprises the transfer, onto a screening surface (6) of a screen (5), and washing (F6) with a washing fluid, preferably water, of the mixture obtained following the mixing step (4), such that;
- a first fraction from said screen (5) essentially comprises the sorbent material charged with hydrocarbon, and
- a second fraction from said screen (5) essentially consists of a depleted mineral material;
and **in that** said extraction step (10) comprises a centrifugation of said charged sorbent material.

2. Method according to claim 1, **characterised in that** the mineral material is an asphaltic sand.

3. Method according to any of claims 1 and 2, **characterised in that** it further comprises a step for transferring (F7; F7V) the second fraction, consisting of a mixture containing:
- mineral materials;
- the washing fluid; and
- small quantities of sorbent material,
to a processing circuit (F12 - F18) suitable for retrieving, separately:
- the mineral material cleared of most of the hydrocarbons initially contained therein,
- the washing fluid; and,
- the small fragments of sorbent material not retained during the washing/screening step.

4. Method according to claim 3, **characterised in that** the retrieved washing fluid is recycled (F19), particularly for reuse as a washing fluid.

5. Method according to claim 3 or 4, **characterised in that** the retrieved sorbent material that was not retained during the washing/screening step is transferred into a station where additional separation of the hydrocarbons from the sorbent material is performed and/or it is converted with a view to a specific use.

6. Method according to any of the above claims, **characterised in that** it further comprises a step for converting a portion of the charged sorbent material with a view to a specific use.

7. Method according to any of the above claims, **characterised in that** it comprises a step, prior to the step for mixing (4) the mineral material with a sorbent material, for preparing the mineral material by mixing (3) same with a solvent (F2) and/or a diluent (F1), said diluent being preferably water.

8. Method according to any of the above claims, **characterised in that**, in the step for mixing (4) the mineral material with the sorbent material, a solvent is added to the mixture.

9. Method according to any of the above claims, **characterised in that** a sorbent material chosen such that the sorption is reversible is used, and **in that**, after extracting the hydrocarbon, the sorbent material is reused in the mixture provided during the mixing step.

10. Method according to any of the above claims, **characterised in that**, after the screening step, and before the extraction step, it comprises at least one further step first for mixing with a diluent and a solvent, said mixing being followed by screening to separate the sorbent material charged with hydrocarbon from the mineral material adhering to said hydrocarbon.

11. Method according to any of the above claims, **characterised in that** the extraction step further comprises an abrasion of the charged sorbent material.

12. Method according to any of claims 2 to 5, **characterised in that** the washing fluid is water.

13. Method according to any of claims 7 and 10, **characterised in that** the diluent is water.

14. Method according to any of the above claims, **characterised in that** the sorbent material is presented in the form of grains or flakes, particularly obtained by shredding.

15. Method according to any of the above claims, **characterised in that** the sorbent material is an essentially adsorbent material.

16. Installation for the use of a method for extracting or producing hydrocarbon from a granular or fragmentary solid mineral material (1) according to any of the above claims, **characterised in that** it comprises, arranged successively in series:
- a mixer (4) provided for mixing said mineral material with a sorbent material and with a diluent, preferably water, such that the mineral material is charged with hydrocarbon to the detriment of the mineral material;
- a screening surface (6) provided for separating a first fraction comprising an essential portion of the sorbent material charged with hydrocarbon, from a second fraction essentially consisting of a depleted mineral material;
- washing means, preferably with water, on said screening surface;
- means (7, 8, 9, 10) for processing the first fraction separately from said second fraction;
said means for processing the first fraction comprising a centrifugation device (10) provided for extracting most of the hydrocarbon present on the separated sorbent material portion.
